# EUROPÄISCHE PATENTSCHRIFT

(11) **EP 2 286 977 B1**
(45) Veröffentlichungstag und Bekanntmachung des Hinweises auf die Patenterteilung: **16.09.2015**
(21) Anmeldenummer: 10007734.6
(22) Anmeldetag: 26.07.2010
(51) Int. Cl.: B29C 45/16, H02K 5/08

(54) **Herstellung des Motorenstators einer Spaltrohrpumpe**
Production of the motor stator of a rotor can pump
Fabrication du stator de moteur d'une pompe à tube d'entrefer

(30) Priorität: 14.08.2009 DE 102009037655
(43) Veröffentlichungstag der Anmeldung: 23.02.2011
(73) Patentinhaber: WILO SE, 44263 Dortmund (DE)
(72) Erfinder: Küster, Bernd, 44379 Dortmund (DE); Hoheisel, Stephan, 44287 Dortmund (DE); Strelow, Günter, 44801 Bochum (DE)
(74) Vertreter: Cohausz Hannig Borkowski Wißgott

(56) Entgegenhaltungen:
- EP-A1- 0 551 550
- EP-A1- 0 623 442
- EP-A1- 1 469 488
- EP-A1- 2 040 354
- EP-A2- 0 844 723
- WO-A1-00/33446
- WO-A1-02/103883
- WO-A2-01/84690
- DE-A1- 2 408 782
- DE-A1- 19 705 974
- DE-A1- 19 845 864
- DE-A1- 19 907 556
- DE-A1-102008 001 539
- DE-A1-102008 002 129
- DE-B- 1 186 544
- US-A- 5 004 577
- US-A- 6 075 304
- US-A1- 2006 249 876
- US-B1- 6 437 464

## Beschreibung

Die Erfindung betrifft ein Verfahren zum Herstellen des Motorenstators einer Spaltrohrpumpe im Spritzguss oder Transferpressverfahren.

Es ist bekannt, den Motorenstator einer Spaltrohrpumpe in der Weise herzustellen, dass Stator und Spaltrohr separat hergestellt und dann montiert werden. Dies erfordert eine große Präzision, einen hohen Materialeinsatz, einen erheblichen Montageaufwand und einen großen Zeitaufwand für die Produktionszykluszeiten.

Aufgabe der Erfindung ist es, ein Verfahren der eingangs genannten Art so zu verbessern, dass bei geringem Material, Montage- und Zeitaufwand eine hohe Präzision und insbesondere ein besonders kleiner Luftspalt zwischen Rotor und Stator erreicht werden. Auch ist es das Ziel der konstruktiven und verfahrenstechnischen Lösung, die Baugruppe Motorgehäuse - Stator - Spalttopf und gegebenenfalls weitere Komponenten möglichst in einem einzigen Zweikomponenten insbesondere Mehrkomponenten Spritzgussverfahren oder Transferpressverfahren kostengünstig und ohne zusätzliche mechanische Bearbeitungs- und Montageschritte urformend und werkzeugfallend herzustellen.

Diese Aufgabe wird erfindungsgemäß dadurch gelöst, dass im Zwei- oder Mehrfachkomponenten-Spritzgussverfahren oder Transferpressverfahren zuerst eine erste Kunststoffmenge in die Form eingebracht insbesondere gespritzt wird, hierbei die erste Kunststoffmenge die in der Form befindlichen Einlegeteile insbesondere metallenen Teile und Wicklungen des Stators umgibt und den insbesondere zylindrischen Raum für das Spaltrohr oder den Spalttopf dadurch freilässt, dass bewegliche Werkzeugkerne oder Schieber diesen Raum ausfüllen, und dass danach der Raum von den Werkzeugkernen oder Schiebern freigefahren wird und die das Spaltrohr/Spalttopf bildende zweite Kunststoffmenge in den frei gelassenen Raum eingebracht wird, wobei für die erste Kunststoffmenge ein duroplastischer Kunststoff und für die zweite Kunststoffmenge ein elastomerer oder themoplastischer Kunststoff verwendet wird.

Ein solches Verfahren hat u. a. folgende Vorteile:
- Ein geringer und kostengünstigerer Materialeinsatz,
- entfeinte mechanische Toleranzen,
- ein geringerer mechanischer und somit elektrischer Luftspalt zwischen Rotor und Stator und damit eine Effizienzsteigerung. So gelingt es, die Wandstärke des Spaltrohres bzw. Spalttopfes auf eine Dicke von 0,1 bis 0,2 mm herunterzubringen,
- verkürzte Produktionszykluszeiten und geringerer Montageaufwand.

Aus der EP 0 844 723 ist es an sich bekannt, bei einer Motorkreiselpumpe unterschiedliche Kunststoffe zu verwenden, aber es wird für das Spaltrohr kein gegenüber dem Statorkunststoff unterschiedlicher Kunststoff vorgeschlagen, so dass das Problem, ein Spaltrohr mit möglichst geringer Wandstärke zu erreichen, nicht gelöst wird. Darüber hinaus ist es bei Pumpen ohne Spaltrohr bekannt, unterschiedliche Kunststoffe einzusetzen.

Alternativ wird vorgeschlagen, dass für beide Kunststoffmengen ein thermoplastischer Kunststoff verwendet wird.

Vorzugsweise wird die zweite Kunststoffmenge in den frei gelassenen Raum eingespritzt. Alternativ wird die zweite Kunststoffmenge an die Innenwand des frei gelassenen Raums als dünne Schicht aufgespritzt oder aufgesprüht.

Vorzugsweise wird vorgeschlagen, dass im ersten Verfahrensschritt während des Einbringens insbesondere Einspritzens der ersten Kunststoffmenge der zylindrische Raum von einem zylindrischen Kern entsprechender Größe ausgefüllt ist. Auch ist von Vorteil, wenn im zweiten Verfahrensschritt ein zweiter zylindrischer Kern im zylindrischen Raum koaxial einliegt, dessen Außendurchmesser dem Innendurchmesser des Spaltrohres entspricht.

Das Spaltrohr kann einen Spalttopf bilden. Hierbei kann am Spaltrohr oder Spalttopf auf der dem Pumpenläufer zugewandten Seite ein Flansch angeformt sein, der insbesondere den Motorenraum vom Pumpenraum trennt. Ferner wird hierzu vorgeschlagen, dass am Spalttopf auf der dem Pumpenläufer abgewandten Seite insbesondere Stirnseite ein Lager der Motorenwelle oder eine Lageraufnahme für das Lager der Motorenwelle angeformt wird.

Besonders vorteilhaft ist es, wenn die erste Kunststoffmenge zugleich das Motorgehäuse bildet. Vorzugsweise wird vorgeschlagen, dass der Motorenstator den Stator einer EC-Maschine bildet.

Alternativ kann aber auch für beide Kunststoffmengen ein duroplastischer Kunststoff verwendet werden.

Eine einfache und sichere Dichtung wird erzielt, wenn am Flansch des Spaltrohres/Spalttopfes auf der dem Pumpenläufer zugewandten Seite eine ringförmige Dichtung befestigt insbesondere angespritzt wird.

Vorteilhafte Ausgestaltungen der Erfindung sind in den Unteransprüchen aufgeführt.

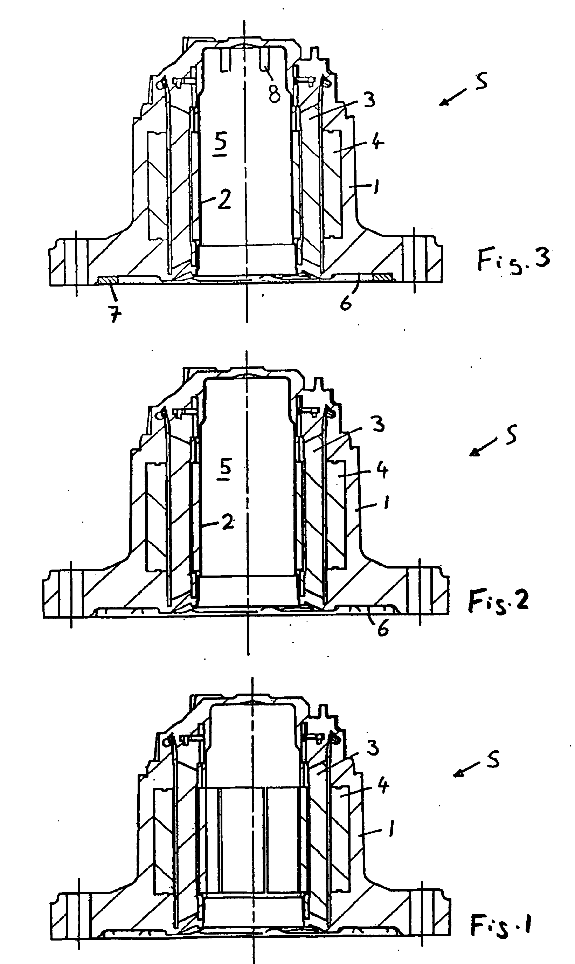

Ein Ausführungsbeispiel der Erfindung ist in den Zeichnungen in axialen Schnitten dargestellt und wird im Folgenden näher beschrieben. Es zeigen
- Figur 1: den Motorenstator nach dem Einbringen/Einspritzen der ersten Kunststoffmenge,
- Figur 2: den Motorenstator nach dem Einbringen/Einspritzen der zweiten Kunststoffmenge,
- Figur 3: den Motorenstator nach dem Einbringen/Einspritzen der Dichtung.

Bei der erfindungsgemäßen Lösung dient bei einer Spaltrohrpumpe die äußere Umspritzung des Motorenstators S bzw. die Umhüllung der elektrischen Wicklung 3 und des Rückschlussrings 4 gleichzeitig als Isolation und als Motorgehäuse und besteht aus einem kostengünstigen Kunststoff, möglichst aus einer duroplastischen Formmasse. Diese erste Kunststoffmenge 1 liefert als erste Komponente neben den isolatorischen Eigenschaften auch die notwendige mechanische Festigkeit und Steifigkeit des späteren Formteils. Diese Komponente wird in der für die mechanischen Eigenschaften notwendigen Mindest-Wandstärke hergestellt und stellt somit den "trockenen", nicht-medienberührenden Bereich der Statorumspritzung dar. Für diese erste Kunststoffmenge 1 als erste Komponente kommen verschiedene Kunststoffe in Frage, in erster Linie aber duroplastische Formmassen.

Für den inneren, Medien-berührenden Statorbereich, das sogenannte Spaltrohr bzw. der Spalttopf 3, wird mit einer zweiten Kunststoffmenge 2 eine zweite Komponente in einem spritzgusstechnischen Verfahrensschritt so eingebracht, dass sie den inneren Bereich zur Minimierung elektromagnetischer Verluste, möglichst dünnwandig ausfüllt und damit als Spaltrohr bzw. Spalttopf 5 den nicht-medienberührenden Bereich der ersten Komponente medienberührend abdichtet. Hierdurch ist es möglich, eine Wandstärke von 0,1 bis 0,2 mm für das Spaltrohr bzw. den Spalttopf zu erreichen.

Dazu wird die zweite, medienberührende und hinreichend fließfähige Kunststoffmenge 2 durch im ersten Verfahrensschritt freigelassene Öffnungen in den Statorinnenbereich eingespritzt. Dies wird werkzeugtechnisch so gelöst, dass bewegliche Werkzeugkerne oder Schieber diese Einspritzöffnungen sowie die auszufüllenden dünnwandigen Innenbereiche im ersten Spritzgussschritt von der ersten Einspritzkomponente (erste Kunststoffmenge 1) freihalten. Für den zweiten oder mehrfachen Einspritzvorgang werden diese Öffnungen durch eine entsprechende Werkzeugbewegung freigefahren und die zweite oder weitere Komponente wird darin eingespritzt. Dies erfolgt einerseits durch bewegliche Schieber oder Kernzüge alleine, oder durch Fahrbewegungen eines Drehtellerwerkzeugs mit zusätzlicher Werkzeugformhälfte.

Hierbei ist am Spalttopf 5 an der Innenseite seines Bodens ein inneres Radiallager 8 koaxial angeformt für das Wellenende des Motorenrotors.

Für die zweite Kunststoffmenge 2 (medienberührende Komponente) kommen primär leichtfließende, medien- und temperaturbeständige vernetzende elastomere Kunststoffe in Frage, die besonders gut auf der ersten, möglichst duroplastischen Komponente bzw. auf den metallischen oder nicht-metallischen Werkstoffen des umspritzten Stators haften. Hierzu dienen in erster Linie elastomere Kunststoffe. Alternativ sind auch thermoplastische Elastomere geeignet.

Die besondere Neuheit der Werkstoffpaarung liegt im Falle einer ersten Kombination von

| | |
|---|---|
| Erste Komponente (Statorumspritzung): | duroplastische Formmasse |
| (erste Kunststoffmenge 1) | (nur für die elektrische Isolierung und mechanische Festigkeit und Steifigkeit) |
| Zweite Komponente (Spaltrohr/Spalttopf): | Elastomer-Werkstoff |
| (zweite Kunststoffmenge 2) | (primär für die Abdichtung gegenüber dem Medium und als zusätzliche elektrische Isolierung) |

darin, dass beide Werkstoffe sogenannte vernetzende Kunststoffe sind. Dies stellt insbesondere einen werkzeug- und verfahrenstechnischen Vorteil dar, da beide Werkstoffe für die Vernetzung bzw. Aushärtung eine temperierte Werkzeugform benötigen. Dadurch kann eine aufwendige thermische Trennung wie sie zum Beispiel für die Kombination von Thermoplasten und vernetzenden Werkstoffen wie z. B. Elastomeren notwendig ist, vermieden werden.

Als weiteren Vorteil dieser Werkstoffkombination ist anzusehen, dass die zweite Komponente - sofern sie als den Statorinnenraum abdichtender Elastomerwerkstoff ausgeführt ist - gleichzeitig eine Dichtungsgeometrie an die Statorumspritzung der ersten Komponente verliersicher anformt. Dadurch entfällt die Notwendigkeit, die hydraulische Schnittstelle der Baugruppe Motor-Pumpengehäuse durch ein zusätzliches, nachträglich zu montierendes Elastomerteil nach außen zur Umgebung hin abzudichten.

Unabhängig von den Vorteilen dieser Werkstoffkombination werden zur Ausformung des Statorinnenraums auch folgende Kombinationen mit der Statorumspritzung vorgeschlagen:
I.

| | |
|---|---|
| Erste Komponente (Statorumspritzung): | thermoplastischer Kunststoff |
| Zweite Komponente (Spaltrohr/Spalttopf): | (nur für die elektrische Isolierung und mechanische Festigkeit und Steifigkeit) Elastomer-Werkstoff |
| | (primär für die Abdichtung gegenüber dem Medium und als zusätzliche elektrische Isolierung) |
| Als weitere Kombinationsmöglichkeiten werden vorgeschlagen: | |

II.

| | |
|---|---|
| Erste Komponente (Statorumspritzung): | duroplastische Formmasse |
| | (nur für die elektrische Isolierung und mechanische Festigkeit und Steifigkeit) |
| Zweite Komponente (Spaltrohr/Spalttopf): | duroplastische Formmasse |
| | (primär für die Abdichtung gegenüber dem Medium und als zusätzliche elektrische Isolierung) |

oder alternativ
III.

| | |
|---|---|
| Erste Komponente (Statorumspritzung): | thermoplastischer Kunststoff |
| | (nur für die elektrische Isolierung und mechanische Festigkeit und Steifigkeit) |
| Zweite Komponente (Spaltrohr/Spalttopf: | thermoplastischer Kunststoff |
| | (primär für die Abdichtung gegenüber dem Medium und als zusätzliche elektrische Isolierung) |

Schließlich wird noch folgende Kombination vorgeschlagen:
IV.

| | |
|---|---|
| Erste Komponente (Statorumspritzung): | duroplastische Formmasse |
| | (nur für die elektrische Isolierung und mechanische Festigkeit und Steifigkeit) |
| Zweite Komponente (Spaltrohr/Spalttopf): | thermoplastischer Kunststoff |
| | (primär für die Abdichtung gegenüber dem Medium und als zusätzliche elektrische Isolierung) |

Für den Fall, dass die zweite Komponente (für den Statorinnenraum) die Dichtung für die hydraulische Schnittstelle Motor-Pumpengehäuse werkstoffbedingt im zweiten Verfahrensschritt nicht mit anformen kann (Thermoplast), wird vorgeschlagen, diese Dichtung als weitere Spritzgusskomponente zunächst an die erste Komponente anzuformen. So wird beispielsweise diese Dichtung in einer beheizten Werkzeughälfte mit der Statorumspritzung hergestellt und dann die nicht-vernetzende (thermoplastische) Komponente für den Statorinnenraum in einer sogenannten kalten Werkzeughälfte (Umsetzverfahren oder Drehtellerwerkzeug) eingespritzt und ausgekühlt.

Am Spaltrohr oder Spalttopf 5 wird auf der dem Pumpenläufer abgewandten Seite insbesondere Stirnseite ein Lager 8 der Motorenwelle oder eine Lageraufnahme für das Lager der Motorenwelle angeformt. Am Flansch 6 des Spaltrohres/Spalttopfes 5 wird auf der dem Pumpenläufer zugewandten Seite eine ringförmige Dichtung 7 befestigt insbesondere angespritzt.

## Patentansprüche

1. Verfahren zum Herstellen des Motorenstators (S) einer Spaltrohrpumpe im Spritzguss oder Transferpressverfahren, **dadurch gekennzeichnet, dass** im Zwei- oder Mehrfachkomponenten-Spritzgussverfahren oder Transferpressverfahren zuerst eine erste Kunststoffmenge (1) in die Form eingebracht insbesondere gespritzt wird, hierbei die erste Kunststoffmenge die in der Form befindlichen Einlegeteile insbesondere metallenen Teile (4) und Wicklungen (3) des Stators umgibt und den insbesondere zylindrischen Raum für das Spaltrohr oder den Spalttopf (5) dadurch freilässt, dass bewegliche Werkzeugkerne oder Schieber diesen Raum ausfüllen, und dass danach der Raum von den Werkzeugkernen oder Schiebern freigefahren wird und die das Spaltrohr/Spalttopf (5) bildende zweite Kunststoffmenge (2) in den frei gelassenen Raum eingebracht wird, wobei für die erste Kunststoffmenge (1) ein duroplastischer Kunststoff und für die zweite Kunststoffmenge (2) ein elastomerer oder themoplastischer Kunststoff verwendet wird.

2. Verfahren zum Herstellen des Motorenstators (S) einer Spaltrohrpumpe im Spritzguss oder Transferpressverfahren, **dadurch gekennzeichnet, dass** im Zwei- oder Mehrfachkomponenten-Spritzgussverfahren oder Transferpressverfahren zuerst eine erste Kunststoffmenge (1) in die Form eingebracht insbesondere gespritzt wird, hierbei die erste Kunststoffmenge die in der Form befindlichen Einlegeteile insbesondere metallenen Teile (4) und Wicklungen (3) des Stators umgibt und den insbesondere zylindrischen Raum für das Spaltrohr oder den Spalttopf (5) dadurch freilässt, dass bewegliche Werkzeugkerne oder Schieber diesen Raum ausfüllen, und dass danach der Raum von den Werkzeugkernen oder Schiebern freigefahren wird und die das Spaltrohr/Spalttopf (5) bildende zweite Kunststoffmenge (2) in den frei gelassenen Raum eingebracht wird, wobei für beide Kunststoffmengen (1, 2) ein thermoplastischer Kunststoff verwendet wird.

3. Verfahren nach Anspruch 1 oder 2, **dadurch gekennzeichnet, dass** die zweite Kunststoffmenge in den frei gelassenen Raum eingespritzt wird.

4. Verfahren nach Anspruch 1 oder 2, **dadurch gekennzeichnet, dass** die zweite Kunststoffmenge an die Innenwand des frei gelassenen Raums als dünne Schicht aufgespritzt oder aufgesprüht wird.

5. Verfahren nach einem der vorherigen Ansprüche, **dadurch gekennzeichnet, dass** im ersten Verfahrensschritt während des Einbringens insbesondere Einspritzens der ersten Kunststoffmenge (1) der zylindrische Raum von einem zylindrischen Kern entsprechender Größe ausgefüllt ist.

6. Verfahren nach einem der vorherigen Ansprüche, **dadurch gekennzeichnet, dass** im zweiten Verfahrensschritt ein zweiter zylindrischer Kern im zylindrischen Raum koaxial einliegt, dessen Außendurchmesser dem Innendurchmesser des Spaltrohres/Spalttopfes (5) entspricht.

7. Verfahren nach einem der vorherigen Ansprüche, **dadurch gekennzeichnet, dass** am Spaltrohr oder Spalttopf (5) auf der dem Pumpenläufer zugewandten Seite ein Flansch (6) angeformt ist, der insbesondere den Motorenraum vom Pumpenraum trennt.

8. Verfahren nach einem der vorherigen Ansprüche, **dadurch gekennzeichnet, dass** am Spalttopf (5) auf der dem Pumpenläufer abgewandten Seite insbesondere Stirnseite ein Lager (8) der Motorenwelle oder eine Lageraufnahme für das Lager der Motorenwelle angeformt wird.

9. Verfahren nach einem der vorherigen Ansprüche, **dadurch gekennzeichnet, dass** die erste Kunststoffmenge (1) zugleich das Motorgehäuse bildet.

10. Verfahren nach einem der vorherigen Ansprüche, **dadurch gekennzeichnet, dass** der Motorenstator den Stator einer EC-Maschine bildet.

11. Verfahren nach einem der vorherigen Ansprüche, **dadurch gekennzeichnet, dass** für beide Kunststoffmengen (1, 2) ein duroplastischer Kunststoff verwendet wird.

12. Verfahren nach einem der Ansprüche 6 bis 11, **dadurch gekennzeichnet, dass** am Flansch (6) des Spaltrohres/Spalttopfes (5) auf der dem Pumpenläufer zugewandten Seite eine ringförmige Dichtung (7) befestigt insbesondere angespritzt wird.

## Claims

1. Method for producing the motor stator (S) of a canned motor pump by injection moulding or transfer moulding, **characterized in that**, in the two- or multi-component injection-moulding process or transfer-moulding process, first of all a first quantity of plastic (1) is introduced, in particular injected, into the mould, in the process, the first quantity of plastic surrounds the inserts located in the mould, in particular metal parts (4) and windings (3) of the stator, and releases the in particular cylindrical space for the can or the split cage (5) by the fact that movable mould cores or slides fill said space and that the space is then cleared of the mould cores or slides and the second quantity of plastic (2) forming the can/split cage (5) is introduced into the released space, wherein a thermosetting plastic is used for the first quantity of plastic (1) and an elastomeric plastic or thermoplastic is used for the second quantity of plastic (2).

2. Method for producing the motor stator (S) of a canned motor pump by injection moulding or transfer moulding, **characterized in that**, in the two- or multi-component injection-moulding process or transfer-moulding process, first of all a first quantity of plastic (1) is introduced, in particular injected, into the mould, in the process, the first quantity of plastic surrounds the inserts located in the mould, in particular metal parts (4) and windings (3) of the stator, and releases the in particular cylindrical space for the can or the split cage (5) by the fact that movable mould cores or slides fill said space and that the space is then cleared of the mould cores or slides and the second quantity of plastic (2) forming the can/split cage (5) is introduced into the released space, wherein a thermoplastic is used for the two quantities of plastic (1, 2).

3. Method according to Claim 1 or 2, **characterized in that** the second quantity of plastic is injected into the released space.

4. Method according to Claim 1 or 2, **characterized in that** the second quantity of plastic is squirted or sprayed as a thin layer onto the inner wall of the released space.

5. Method according to one of the preceding claims, **characterized in that**, in the first method step during the introduction, in particular injection, of the first quantity of plastic (1), the cylindrical space is filled by a cylindrical core of corresponding size.

6. Method according to one of the preceding claims, **characterized in that**, in the second method step, a second cylindrical core, the outside diameter of which corresponds to the inside diameter of the can/split cage (5), lies coaxially in the cylindrical space.

7. Method according to one of the preceding claims, **characterized in that** a flange (6) which in particular separates the motor compartment from the pump compartment is integrally formed on the can or split cage (5) on the side facing the pump impeller.

8. Method according to one of the preceding claims, **characterized in that** a bearing (8) of the motor shaft or a bearing receptacle for the bearing of the motor shaft is integrally formed on the split cage (5) on the side, in particular end side, facing away from the pump impeller.

9. Method according to one of the preceding claims, **characterized in that** the first quantity of plastic (1) at the same time forms the motor housing.

10. Method according to one of the preceding claims, **characterized in that** the motor stator forms the stator of an EC machine.

11. Method according to one of the preceding claims, **characterized in that** a thermosetting plastic is used for the two quantities of plastic (1, 2).

12. Method according to one of Claims 6 to 11, **characterized in that** an annular seal (7) is fastened, in particular injection-moulded, on the flange (6) of the can/split cage (5) on the side facing the pump impeller.

## Revendications

1. Procédé de fabrication du stator (S) du moteur d'une pompe à moteur à gaine par moulage par injection ou par un procédé de transfert par compression, **caractérisé en ce que**
dans le procédé de moulage par injection de deux ou plusieurs composants ou le procédé de transfert par compression, une première quantité (1) de matière synthétique est amenée dans le moule, en particulier par injection, la première quantité de matière synthétique entourant les pièces insérées dans le moule, en particulier les parties métalliques (4) et les enroulements (3) du stator et l'espace en particulier cylindrique pour la gaine ou le chapeau (5) de la gaine étant ainsi libéré,
**en ce que** des âmes mobiles d'outil ou des poussoirs remplissent cet espace,
**en ce qu'**ensuite, l'espace est libéré par les âmes d'outil ou les poussoirs et la deuxième quantité (2) de matière synthétique qui forme la gaine ou le chapeau (5) de la gaine est amenée dans l'espace libéré et
**en ce qu'**une matière synthétique thermodurcissable étant utilisée pour la première quantité (1) de matière synthétique et une matière synthétique élastomère ou thermoplastique est utilisée pour la deuxième quantité (2) de matière synthétique.

2. Procédé de fabrication du stator (S) du moteur d'une pompe à moteur à gaine par moulage par injection ou par un procédé de transfert par compression, **caractérisé en ce que**
dans le procédé de moulage par injection de deux ou plusieurs composants ou le procédé de transfert par compression, une première quantité (1) de matière synthétique est amenée dans le moule, en particulier par injection, la première quantité de matière synthétique entourant les pièces insérées dans le moule, en particulier les parties métalliques (4) et les enroulements (3) du stator et l'espace en particulier cylindrique pour la gaine ou le chapeau (5) de la gaine étant ainsi libéré,
**en ce que** des âmes mobiles d'outil ou des poussoirs remplissent cet espace,
**en ce qu'**ensuite, l'espace est libéré par les âmes d'outil ou les poussoirs et la deuxième quantité (2) de matière synthétique qui forme la gaine ou le chapeau (5) de la gaine est amenée dans l'espace libéré et
**en ce qu'**une matière synthétique thermoplastique est utilisée pour les deux quantités (1, 2) de matière synthétique.

3. Procédé selon les revendications 1 ou 2, **caractérisé en ce que** la deuxième quantité de matière synthétique est injectée dans l'espace libéré.

4. Procédé selon les revendications 1 ou 2, **caractérisé en ce que** la deuxième quantité de matière synthétique est appliquée ou pulvérisée en couche mince sur la paroi intérieure de l'espace libéré.

5. Procédé selon l'une des revendications précédentes, **caractérisé en ce que** dans la première étape du procédé, pendant l'amenée et en particulier l'injection de la première quantité (1) de matière synthétique, l'espace est cylindrique est rempli par une âme cylindrique de taille correspondante.

6. Procédé selon l'une des revendications précédentes, **caractérisé en ce que** dans la deuxième étape du procédé, une deuxième âme cylindrique dont le diamètre correspond au diamètre intérieur de la gaine ou de chapeau (5) de la gaine est insérée coaxialement dans l'espace cylindrique.

7. Procédé selon l'une des revendications précédentes, **caractérisé en ce qu'**une bride (6) qui sépare en particulier l'espace du moteur de l'espace de pompage est formée sur le côté de la gaine ou du chapeau (5) de la gaine tourné vers le rotor de la pompe.

8. Procédé selon l'une des revendications précédentes, **caractérisé en ce qu'**un palier (8) pour l'arbre moteur ou un logement pour le palier de l'arbre moteur sont formés sur le côté du chapeau (5) de la gaine non tourné vers le rotor de la pompe et en particulier sur son côté frontal.

9. Procédé selon l'une des revendications précédentes, **caractérisé en ce que** la première quantité (1) de matière synthétique forme en même temps le boîtier du moteur.

10. Procédé selon l'une des revendications précédentes, **caractérisé en ce que** le stator du moteur forme le stator d'une machine EC.

11. Procédé selon l'une des revendications précédentes, **caractérisé en ce qu'**une matière synthétique thermodurcissable est utilisée pour les deux quantités (1, 2) de matière synthétique.

12. Procédé selon l'une des revendications 6 à 11, **caractérisé en ce qu'**un joint d'étanchéité annulaire (7) est fixé et en particulier appliqué par injection sur le côté de la bride (6) de la gaine ou du chapeau (5) de la gaine tourné vers le rotor de la pompe.
